# EUROPEAN PATENT APPLICATION

(11) **EP 4 539 490 A1**
(43) Date of publication of application: **16.04.2025**
(21) Application number: 23202826.6
(22) Date of filing: 10.10.2023
(51) Int. Cl.: H04N 23/695

(54) **TARGET TRACKING IN A WATER AREA**

(71) Applicant: Sea.AI GmbH, 4030 Linz (AT)
(72) Inventor: KUMAR, Bharat, 1060 VIENNA (AT); THETTER, Tobias, 1030 VIENNA (AT); MOSER, David, 1090 VIENNA (AT); KAUFMANN, Josef, 1170 VIENNA (AT)
(74) Representative: Argyma

(57) **Abstract**

The invention relates to a method for tracking an object (5) in a water area (2) using a tracking system (30), comprising a tracking phase including controlling a pan-tilt unit to orientate a camera module around the pan axis and the tilt axis to centre the field of view of said camera module on a selected object (5) and thus track said selected object (5).

## Description

### General technical field

The invention relates to boat safety and more particularly to a method, a control device and a system for tracking an object in a water area.

### State of the art

It is known in the art to equip a boat with a detection system for detecting objects at sea and avoid a collision.

Active detection systems include RADAR or SONAR devices which actively send respectively electromagnetic or acoustic waves that can reflect on the objects. Thus, when reflected waves are received by the detection device along a particular direction and after a measured time, the detection device can detect the direction and the distance of the object. In other words, the detection system uses the reflected waves to estimate a profile of the environment and possible dangerous objects in the water.

Such systems need trained personnel to interpret the provided data, which constitutes a major drawback. Moreover, most of the time, such systems do not allow to identify clearly the detected objects.

On the other hand, camera-based systems using machine vision are passive systems, which provide data that are easy to interpret. Big data-trained artificial neural networks (ANN) or specifically convolutional neural networks (CNN) can be used for detecting and classifying water objects depicted on the camera images. Object tracking methods are used to filter neural networks detections to follow objects and predict their trajectory. The coordinates of the tracked objects can be calculated and used for further processing.

In these solutions, the tracking concerns all the objects detected in the images. An identifier is assigned to each object and the distance and relative angle between the camera and each object is calculated to predict their course and avoid any collision.

As these distance and trajectory calculations may need a lot of processing, depending on the number of detected objects, and as the computing capacity onboard a boat may be limited for cost, space and reactivity issues, the frequency of the distance and trajectory calculations is reduced.

Such solutions may therefore prove to be complex, slow, or inaccurate, which increases the risk of collision, especially with close or dangerous objects.

There is thus a need for an easy, reliable and efficient solution that allows to remedy at least partially these drawbacks.

### General presentation of the invention

To this aim, the invention first relates to a method for tracking an object in a water area using a tracking system, said tracking system comprising a pan-tilt unit, a camera module mounted on set pan-tilt unit, and a control module implementing a neural network, the pan-tilt unit being configured to control the orientation of the camera module around a pan axis and a tilt axis, said method comprising:
- a continuous phase comprising the steps of generating a video stream comprising a series of images using the camera module, said series of images representing the field of view of said camera module on the water area, wherein each image of the series of images is defined in an image coordinate reference system, and detecting at least one object in said generated series of images using said neural network,
- at any time during the continuous phase, a tracking phase comprising a preliminary step of selecting one object to be tracked among the at least one detected object and an iterative tracking loop comprising the steps of:
- determining, by the control module, the coordinates of the selected object in the image coordinate reference system,
- computing, by the control module, a pan angle and a tilt angle of the camera module using the determined coordinates and the coordinates of the centre of each image in the image coordinate reference system that allow the displacement of the camera module so that the series of images is centred on the selected object,
- sending, by the control module, a control command to the pan-tilt unit, said control command allowing the control of the pan-tilt unit according to said computed pan angle and tilt angle,
- receiving, by the pan-tilt unit, the sent control command,
- orientating, by the pan-tilt unit and using the received control command, the camera module around the pan axis and the tilt axis to centre the field of view of the camera module on the selected object and thus track said selected object over time.

The method according to the invention allows tracking a given object to further monitor its course, distance and, when applicable, collision risk level, for example with a boat embedding the tracking system or with the shore. The tracking mode includes controlling the pan-tilt unit, and therefore the field of view of the camera module, to concentrate on one specific object of interest. Such tracking is beneficial for both the tracking system and the end user to be able to follow an object and to keep it in the field of view (FoV) of the camera module. The tracking system may be advantageously mounted on a boat or on a fixed point on the shore.

Advantageously, the tracking phase comprises, preferably at each tracking loop, a step of calculating the distance between the tracking system and the tracked object. The frequency of distance calculation may be higher than one per iteration to closely monitor the tracked object and reduce drastically the risk of collision between the tracked object and the structure holding the tracking system.

Advantageously, the tracking phase comprises, preferably at each tracking loop, at least one step of calculating the angle between the tracking system and the tracked object. The frequency of angle calculation may be higher than one per tracking loop iteration to closely monitor the tracked object and reduce drastically the risk of collision between the tracked object and the structure holding the tracking system. The angle allows in particular to determine the course of the object and, with the distance, the speed of the object.

In an embodiment, the control command comprises the computed pan angle value and tilt angle value. In an alternative embodiment, to allow the control of the pan-tilt unit according to said computed pan angle and tilt angle, the control command comprises a pan rotary speed and a tilt rotary speed, and a pan rotary duration and a tilt rotary duration.

In an embodiment, the tracking system further comprising an inertial measurement unit mounted on the camera module or on the pan-tilt unit, the method further comprises the steps of sending periodically, by the inertial measurement unit, to the control module, a value along the yaw axis and a value along the pitch axis and optionally a value along the roll axis, and stabilizing, by the control module, the images of the series of images along the yaw and pitch directions, and optionally along the roll direction, using said received values. This allows to keep the camera always on the horizon by compensating for the vessel or the object movement/rotation or external disturbances (e.g., waves).

Preferably, the stabilizing step is performed continuously, i.e., during the continuous phase and during the tracking phase. Advantageously, the stabilisation loop is performed during the tracking loop at a higher loop rate than during the continuous phase.

Advantageously, the step of computing, by the control module, a pan angle and a tilt angle of the camera module further comprises using the received value along the yaw axis and the received value along the pitch axis to compute said pan angle and said tilt angle. This allows to simultaneously have the object in the centre of the field of view during the boat or objects movements while stabilising the camera module mechanically around the pan/tilt axes to compensate for waves movements or fast movements of the boat.

According to an aspect of the invention, the tracking phase is triggered (e.g., initiated) manually by a user, for example by pressing on a key or a button, to allow the user to select the start time of the tracking phase of a selected object.

Alternatively, the tracking phase may be triggered automatically by the control module.

Advantageously, the iterative tracking loop is performed automatically by the control module once an object to be tracked has been selected.

The selection of the object to be tracked may be performed automatically, for example by selecting the object being the closest of the centre on the images of the series of images or selecting the object that seems to be the most dangerous.

Alternatively, the object to be tracked may be selected by a user via a user interface, for example on a tactile screen or using buttons.

Advantageously, the method further comprising a step of displaying the series of images on a screen to a user during the continuous phase for the user to follow the detected objects and possibly decide on the future course of the boat, if the tracking system is mounted on a boat.

Advantageously, the method further comprises a step of displaying the series of images on a screen to a user during the tracking phase for the user to follow the tracked object closely in real time and possibly change the course of the boat holding the tracking system in this case.

In the continuous phase, the pan-tilt unit may move from left to right and right to left periodically or rotate to scan the horizon or the closer vicinity of the own boat.

Advantageously, the neural networks providing detection outputs, the method comprises a step of filtering the raw detections of said detection outputs. The filtering allows to reduce false positives, false negatives and to improve accuracy and precision of the bounding boxes of the detected objects in the image coordinate reference system.

Advantageously, the method comprises a step of predicting a future path of the tracked object based on a previous path of said tracked object. Preferably, the step of predicting the future path comprises computing the distance of the tracked object at a higher frequency rate that in the continuous mode. The estimation of the future path of objects could also happen in the continuous phase.

Advantageously, the method further comprises the step of using said estimated future path to improve the tracking to compensate for the system dynamics or delay.

Advantageously, the method allows to extrapolate the future positions and/or path of the object(s) using the observed and predicted positions of the previous iterations of a Kalman-Filter(s), which results in estimating the image coordinate velocities of the tracked object(s).

Advantageously, by predicting the future path of the object, the tracking module is configured to estimate future positions of the object in the image, and thus the corresponding pan-tilt unit angles, and to calculate the error signal based on the difference between predicted angles and the setpoint angles, as opposed to just difference between the current angles and the setpoint angles. This allows to reduce the input lag of the control loop and increase the precision of the tracking and centring of the pan-tilt unit.

The invention also relates to a control module for a tracking system, said tracking system comprising a pan-tilt unit, a camera module mounted on set pan-tilt unit, and said control module, the pan-tilt unit being configured to control the orientation of the camera module around a pan axis and a tilt axis, said control module implementing a neural network and being configured to:
- receive a video stream from the camera module, said video stream comprising a series of images,
- in a continuous phase, detect at least one object in said received series of images using said neural network,
- in a tracking phase: allow the selection of one object to be tracked among the at least one detected object, determine the coordinates of the selected object in the image coordinate reference system, compute a pan angle and a tilt angle of the camera module using the determined coordinates and the coordinates of the centre of each image in the image coordinate reference system that allow the displacement of the camera module so that the series of images is centred on the selected object, and send a control command to the pan-tilt unit, said control command allowing the control of the pan-tilt unit according to said computed pan angle and tilt angle.

Advantageously, the control module is configured to, during a tracking phase, preferably at each tracking loop, calculate the distance between the tracking system and the tracked object. The frequency of distance calculation may be higher than one per iteration to closely monitor the tracked object and reduce drastically the risk of collision between the tracked object and the structure holding the tracking system.

Advantageously, the control module is configured to, during the tracking phase, preferably at each tracking loop, calculate the angle between the tracking system and the tracked object. The frequency of angle calculation may be higher than one per tracking loop iteration to closely monitor the tracked object and reduce drastically the risk of collision between the tracked object and the structure holding the tracking system. The angle allows in particular to determine the course of the object and, with the distance, the speed of the object.

In an embodiment, the control command comprises the computed pan angle value and tilt angle value. In an alternative embodiment, to allow the control of the pan-tilt unit according to said computed pan angle and tilt angle, the control command comprises a pan rotary speed and a tilt rotary speed, and a pan rotary duration and a tilt rotary duration.

In an embodiment, the control module is configured to receive a value along the yaw axis and a value along the pitch axis, and optionally a value along the roll axis, sent periodically by an inertial measurement unit and to stabilize the images of the series of images along the yaw and pitch directions, and optionally along the roll direction, using values received.

In an embodiment, the control module is configured to compute the pan angle and the tilt angle of the camera module using the value along the yaw axis and the value along the pitch axis received from the inertial measurement unit. This allows to simultaneously have the object in the centre of the field of view during the boat or objects movements while stabilising the camera module mechanically around the pan/tilt axes to compensate for waves movements or fast movements of the boat.

According to an embodiment, the control module is configured to automatically trigger the tracking phase.

Advantageously, the control module is configured to determine that a detected object is dangerous and to consequently automatically trigger the tracking phase.

In an embodiment, the control module is configured to automatically activate the iterative tracking loop once an object to be tracked has been selected.

In an embodiment, the control module is configured to automatically select the object to be tracked, for example the object which is the closest of the centre on the images of the series of images or selecting the object that seems to be the most dangerous.

Advantageously, the neural network providing detection outputs, said control module is configured to, in the continuous mode, filter raw detections in said detection outputs to improve the detection of objects.

In an embodiment, the control module is configured to predict a future path based on a previous path of the object using the filtered raw detections.

The invention also relates to a tracking system for tracking an object in a water area, said tracking system comprising a pan-tilt unit, a camera module mounted on set pan-tilt unit, and a control module as presented here before, the pan-tilt unit being configured to control the orientation of the camera module around a pan axis and a tilt axis, wherein:
- the camera module is configured to, in a continuous phase, generate a video stream comprising a series of images representing the field of view of said camera module on the water area, wherein each image of the series of images is defined in an image coordinate reference system,
- the pan-tilt unit is configured to receive a control command sent by the control module and orientate, using a received control command, the camera module around the pan axis and the tilt axis to centre the field of view of the camera module on the selected object and thus track said selected object.

In an embodiment, the tracking system further comprises an inertial measurement unit mounted on the camera module or on the pan-tilt unit. The IMU values allows to stabilise the camera module on the pan-tilt unit mechanically.

Preferably, the inertial measurement unit is configured to periodically send to the control module a value along the yaw axis and a value along the pitch axis, and optionally a value along the roll axis, and wherein the control module is further configured to receive said values and stabilize the images of the series of images along the yaw and pitch directions, and optionally along the roll direction, using said received values.

Advantageously, the tracking system comprises a display screen configured to receive and display the series of images to a user during the continuous phase and/or tracking phase. The user may thus follow the centred tracked object visually in real time.

In the continuous phase, outside the tracking phase, the pan-tilt unit is configured to move from left to right and right to left periodically or rotate to scan around the tracking system.

Advantageously, the camera module comprises at least one camera, preferably one, two, three or four cameras. For example, the camera module comprises a RGB camera and/or a thermal camera.

Preferably, the camera module comprises at least one thermal camera, said thermal camera being configured to generate the series of images.

A boat comprising a tracking system as presented here before.

The invention also relates to a boat comprising a system as described previously. The boat may be e.g., a sailing boat, a racing boat, a ship or any kind of vessel.

In an embodiment, the boat comprises a hull and a cabin and/or a mast, wherein the camera module is mounted on said cabin or said mast.

### FIGURES

[Fig 1]: Figure 1 schematically illustrates a top view of a water area comprising a boat according to the invention and four objects being vessels.
[Fig 2]: Figure 2 schematically illustrates an exemplary embodiment of a boat according to the invention.
[Fig 3]: Figure 3 illustrates an exemplary embodiment of camera module mounted on a pan-tilt unit of the boat of figure 2.
[Fig 4]: Figure 4 illustrates an exemplary embodiment of the method according to the invention.

### DETAILED DESCRIPTION

The tracking system according to the invention allows to track a specific detected object in a water area at any time using a camera module. The water area may be e.g., an ocean, a sea or a lake or any suitable water area where objects need to be detected. The tracking system is preferably mounted on a boat, as described here after, but might equally be used on a fixed point on the shore or any other suitable location to track an object in a water area.

### Boat 1

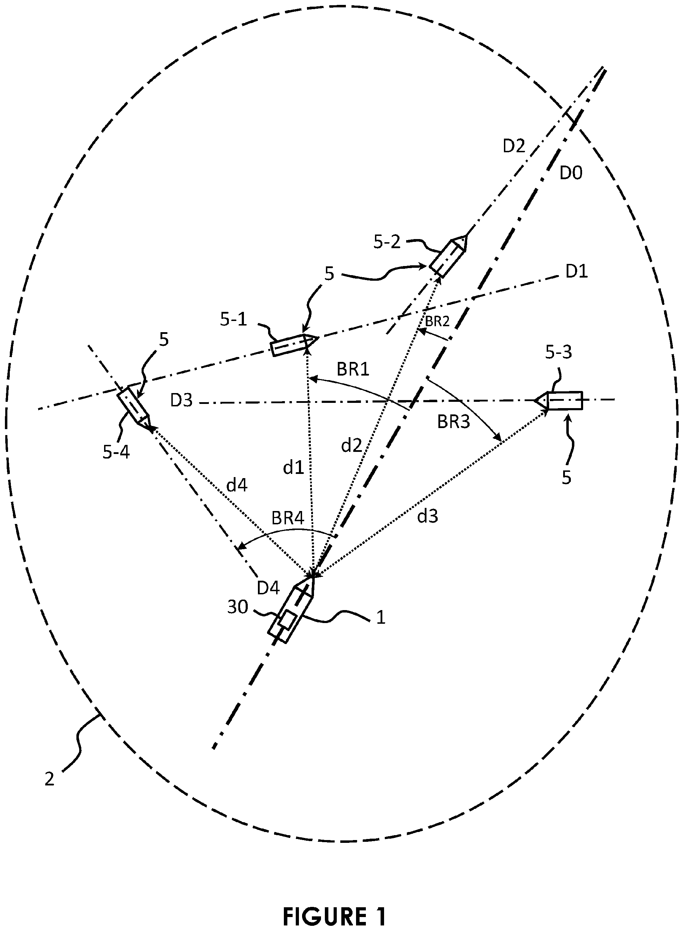

Figure 1 illustrates a boat 1 (or vessel) according to the invention navigating in a water area 2 in a direction D0 toward some objects 5 which are other vessels 5-1, 5-2, 5-3, 5-4 in this non-limiting example. Objects 5 may be fixed, like for example rocks, sand bench or shore zones, or moving like vessels, swimmers, etc.

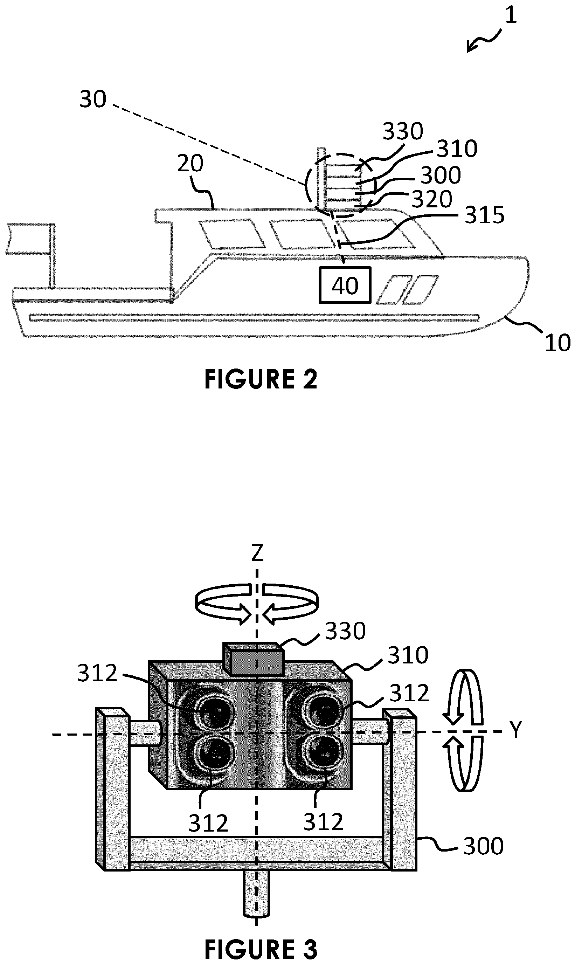

The boat 1 may be a for example a motorboat or sailing boat. In this non-limiting example, in reference to Figure 2, the boat 1 is a motorboat and comprises a hull 10, a cabin 20 and a tracking system 30 according to the invention, mounted on said cabin 20. The boat 1 is characterized by its course in direction D0 (heading) as illustrated on Figure 1.

Four other vessels are represented on Figure 1, referenced respectively 5-1, 5-2, 5-3, 5-4 for identification purposes. These vessels 5-1, 5-2, 5-3, 5-4 are objects 5 from the point of view of the boat 1, in particular of the tracking system 30.

Each object 5 is located at a distance and with an angle relatively to the boat 1. The vessel 5-1 is located at a distance d1 and is heading in a direction D1 (course) which makes an angle BR1 with the direction D0 of the boat 1. The vessel 5-2 is located at a distance d2 and is heading in a direction D2 (course) which makes an angle BR2 with the direction D0 of the boat 1. The vessel 5-3 is located at a distance d3 and is heading in a direction D3 (course) which makes an angle BR3 with the direction D0 of the boat 1. The vessel 5-4 is located at a distance d4 and is heading in a direction D4 (course) which makes an angle BR4 with the direction D0 of the boat 1.

### Tracking system 30

As illustrated on Figure 2, the tracking system 30 comprises a pan-tilt unit 300, a camera module 310, mounted on said pan-tilt unit 300, and a control module 320.

The pan-tilt unit 300, the camera module 310 and the control module 320 are preferably mounted on the same physical entity, for example in a casing, preferably on the top of the cabin 20. Alternatively, the control module 320 may be mounted at a distance from the pan-tilt unit 300 and the camera module 310, for example inside the cabin 20, while the pan-tilt unit 300 and the camera module 310 shall remain at a location where the camera module 310 can monitor the external environment around the boat 1.

In this preferred embodiment, the tracking system 30 further comprises an inertial measurement unit 330 and the boat 1 further comprises a display screen 40 mounted for example inside the cabin 20. The inertial measurement unit 330 is preferably mounted on the camera module 310, as in the example of figure 3, or on the pan-tilt unit 300, preferably in a casing, but could alternatively be mounted anywhere else on the boat 1. The inertial measurement unit 330 is configured to generate measures along a yaw axis, a pitch axis and a roll axis defined relatively to said inertial measurement unit 330.

The tracking system 30 also comprises a communication network 315 that interconnects the camera module 310, the control module 320, the inertial measurement module 330 and the screen 40 to allow communication of data, in particular images, control commands and inertial measurements between said different entities. The communication network 315 may advantageously be the boat internal communication network.

The tracking system 30 is configured to operate during a continuous phase and a tracking phase. The continuous phase is operated continuously by the tracking system 30 and allows to detect objects 5 that are in the water area 2 around the boat 1 and in the field of view of the camera module 310.

### Pan-tilt unit 300

In reference to figure 3, the pan-tilt unit 300 is configured to receive the camera module 310 and control the orientation of said camera module 310 around a pan axis Z and a tilt axis Y.

The pan-tilt unit 300 is configured to receive a control command sent by the control module 320 and which allows the control of said pan-tilt unit 300 according to a pan angle and tilt angle computed by the control module as explained here below.

The pan-tilt unit 300 is configured to orientate the camera module 310 around the pan axis Z and the tilt axis using a received control command to centre the field of view of said camera module 310 on a selected object 5 and track said selected object 5.

In an embodiment, in the continuous phase and outside the tracking phase, the pan-tilt unit 300 is configured to move from left to right and right to left periodically or rotate to scan the horizon in front of the camera module 310.

### Camera module 310

In reference to Figure 3, the camera module 310 is mounted on the pan-tilt unit 300.

The camera module 310 may comprise one or several video cameras 312. The camera or cameras 312 of the camera module 310 are positioned and configured to generate images defining a field of view.

Advantageously, the cameras point to the same direction and are centred to allow a higher resolution and detection view in the centre of the field of view. For example, in a preferred embodiment, the camera module 310 comprises two RGB cameras and two thermal cameras for a wide field of view and a use at daytime and nighttime.

The camera module 310 is configured to generate a video stream comprising a series of images representing the field of view of said camera module 310 on a zone of the water area 2, wherein each image of the series of images is defined in an image coordinate reference system.

The camera module 310 may be configured to generate a video stream comprising a series of images representing the field of view of said camera module 310 with a broad view of the water area 2 (zoom out) in the continuous mode.

The camera module 310 may be configured to generate a video stream comprising a series of images representing the field of view of said camera module 310 with a narrow view of a tracked object 5 (zoom in) in the tracking mode.

### Control module 320

The control module 320 is configured to receive a video stream from the camera module 310, said video stream comprising a series of images.

The control module 320 is configured to, during the continuous phase, detect at least one object 5 in a series of images received from the camera module 310. This detection is performed by a neural network NN implemented by the control module 320.

Advantageously, the control module 320 is configured to, in the continuous mode, filter raw detections in the generated series of images to obtain (or gain) objects from the raw neural network detections, which are probabilities, and reduce the number of false positive and false negative detections.

The control module 320 is configured to, during the tracking phase, allow the selection of one object 5 to be tracked among the at least one detected object 5, determine the coordinates of the selected object 5 in the image coordinate reference system, compute a pan angle and a tilt angle of the camera module 310 using the determined coordinates and the coordinates of the centre of each image in the image coordinate reference system that allow the displacement of the camera module 310 so that the series of images is centred on the selected object 5, and send a control command CC to the pan-tilt unit 300, said control command CC allowing the control of the pan-tilt unit according to said computed pan angle and tilt angle.

To control the pan-tilt unit 300 and allow the displacement of the camera module 310 so that the series of images is centred on the selected object 5, the control module 320 may directly insert the pan angle and the tilt angle in the control command CC or may insert a pan rotary speed, a pan rotary duration, a tilt rotary speed and a tilt rotary duration that will be used to equally control the pan-tilt unit 300 in rotation and tilt to centre the camera module 310 on the tracked object.

The control module 320 is configured to receive from the inertial measurement unit 330 a value along the yaw axis and a value along the pitch axis, and optionally a value along the roll axis, sent periodically by said inertial measurement unit 330, and to stabilize the images of the series of images along the yaw and pitch directions, and optionally along the roll direction, using the received values.

Preferably, the control module 320 is configured to compute the pan angle and the tilt angle of the camera module 310 using the value along the yaw axis and the value along the pitch axis received from the inertial measurement unit 330 to improve image stabilization, in particular when the boat 1 is moving, for example with wave movements.

For example, for the pan parameter, the control module 320 may be configured to calculate a pan delta value, noted "delta_pan", which corresponds to the difference between a pan reference value, noted "pan_ref" and the current pan value, noted "pan": delta_pan = pan_ref - pan. This pan delta value is determined by the control module 320 based on the object detection, i.e. what pan delta angle the camera module 310 needs to be moved to centre the tracked object 5 in the images. Then, the sum of the pan delta value and the current inertial measurement unit 330 yaw value may be advantageously low-pass filter, and noted "yaw_ref_filt = LowPassFilter(yaw_imu + delta_pan)", to reduce the direct influence of object detection with regard to image data. The filtered value may then advantageously be corrected using the current unfiltered inertial measurement unit 330 yaw value to obtain a yaw difference, noted delta_yaw = yaw_ref_filt - yaw imu. Eventually, a pan speed value, noted "pan_speed", is generated using the yaw difference "delta_yaw" using a digital controller (e.g., a PID controller) which determines the new pan-tilt unit 300 pan speed, which is then sent to the pan-tilt unit 300 and applied for a given duration (for example a predetermined time unit for controlling the camera module 310 movement).

Similarly, for the tilt parameter, the control module 320 may be configured to calculate a tilt delta value, noted "delta_tilt", which corresponds to the difference between a tilt reference value, noted "tilt_ref" and the current tilt value, noted "tilt": delta_tilt = tilt_ref - tilt. This tilt delta value is determined by the control module 320 based on the object detection, i.e. what tilt delta angle the camera module 310 needs to be moved to centre the tracked object 5 in the images. Then, the sum of the tilt delta value and the current inertial measurement unit 330 pitch value may be advantageously low-pass filter, and noted "pitch_ref_filt = LowPassFilter(pitch_imu + delta_ tilt)", to reduce the direct influence of object detection with regard to image data. The filtered value may then advantageously be corrected using the current unfiltered inertial measurement unit 330 pitch value to obtain a pitch difference, noted delta_pitch = pitch_ref_filt - pitch_imu. Eventually, a tilt speed value, noted "tilt_speed", is generated using the pitch difference "delta_pitch" using a digital controller (e.g., a PID controller) which determines the new pan-tilt unit 300 tilt speed, which is then sent to the pan-tilt unit 300 and applied for a given duration (for example a predetermined time unit for controlling the camera module 310 movement).

Therefore, both the image side and the inertial measurement unit 330 are considered to centre the object and compensate for movements like e.g., waves. The inertial measurement unit 330 data are used in the control of the pan-tilt unit 300 while the data provided from the image side is low-pass filtered to reduce its influence.

The control module 320 is configured to automatically trigger the tracking phase.

In an embodiment, the control module 320 may be configured to determine that a detected object 5 is dangerous and to consequently automatically trigger the tracking phase.

In an embodiment, the control module 320 is configured to automatically activate the tracking phase once an object 5 to be tracked has been selected.

In an embodiment, the control module 320 is configured to automatically select the object 5 to be tracked, for example the object 5 which is the closest of the centre on the images of the series of images or selecting the object that seems to be the most dangerous.

In an embodiment, the control module 320 is configured to predict a future path based on a previous path of the object using the filtered raw detections.

### Inertial measurement unit 330

The inertial measurement unit 330 allows to stabilize the camera module 310 and is configured to periodically send to the control module 320 a value along the yaw axis and a value along the pitch axis, and optionally a value along the roll axis, and the control module 320 is further configured to receive said values and stabilize the images of the series of images along the yaw and pitch directions, and optionally along the roll direction, using said received values.

### Display screen 40

The display screen 40 is configured to receive and display the series of images to a user during the continuous phase and/or tracking phase. A user may thus follow the centred tracked object visually in real time. The display screen 40 is also configured to allow controlling the whole tracking system 30 and specifically to manually activate the target tracking mode and to select an object to be tracked.

### Example of operation

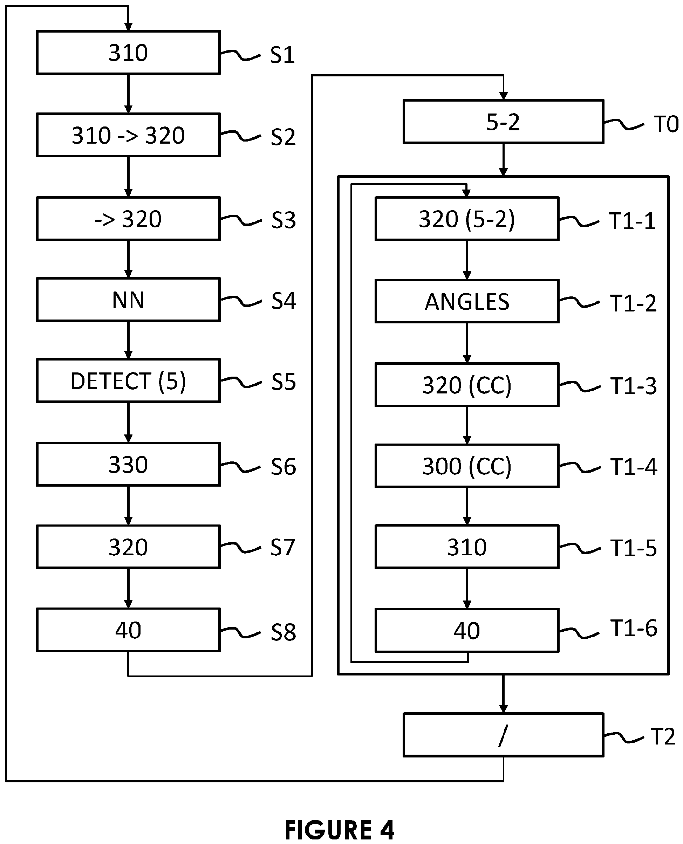

An example of operation is described here after in reference to Figure 4.

In a continuous phase operated continuously by the tracking system 30, the pan-tilt unit 300 moves from left to right and right to left periodically or rotate so that the camera module 310 scans the horizon to detect objects 5.

While scanning the water area 2 along the horizon, the camera module 310 generates in a step S1 a video stream comprising a series of images representing the field of view of said camera module 310 on the water area 2 and sends said generated video stream to the control module 320 in a step S2 via the communication network 315.

The control module 320 receives said images in real-time in a step S3 and transfer in a step S4 said received images for processing to the neural network NN, which detects in a step S5, in the received series of images of the video stream, the objects 5 that are in the field of view of the camera module 310. The detection S5 further includes filtering the raw detections in the detection outputs provided by the neural network NN in the continuous mode to improve the detection of objects 5.

In the continuous phase, the inertial measurement unit 330 sends periodically in a step S6 to the control module 320 a value along the yaw axis and a value along the pitch axis, and optionally a value along the roll axis, and the control module 320 compensates in a step S7 the images of the series of images along the yaw and pitch directions, and optionally along the roll direction, using said received values to stabilize said images.

Preferably, the series of images are displayed on the screen 40 in a step S8 to a user of the boat 1 during the continuous phase, showing the detected objects 5 tagged each with a unique identifier so that said user may monitor the vessels 5-1, 5-2, 5-3, 5-4 around the boat 1.

At any time during the continuous phase, a tracking phase for tracking one of the vessels 5-1, 5-2, 5-3, 5-4 may be triggered either manually by the user, for example by pressing a key or directly on an object 5 appearing on the tactile screen 40, or automatically by the control module 320, for example when the control module 320 determines that the distance or heading or angle of one of the vessels 5-1, 5-2, 5-3, 5-4 may involve a danger for the boat 1.

When the tracking phase is activated, the continuous phase is stopped to allow the pan-tilt unit 300 to follow the tracked vessel 5-2.

During the tracking phase, the images received by the camera module 310 are used to follow the tracked vessel 5-2 and the other vessels 5-1, 5-3, 5-4.

The tracking phase comprises a preliminary step T0 of selecting one object 5 to be tracked in the images among the detected object 5. The selection of the object 5 to be tracked may be performed automatically, for example by selecting the object 5 being the closest of the centre on the images of the series of images or by selecting the object 5 that seems to be the most dangerous in terms of collision with the boat 1. Alternatively, the object 5 to be tracked may be selected by the user via the user interface, for example via the tactile screen 40 or by pressing a button.

Once one of the objects 5 has been selected, for example the vessel 5-2 in the example of Figure 1, the control module 320 triggers automatically an iterative tracking loop. The iterative tracking loop comprises at each iteration the following steps.

First, in a step T1-1, the control module 320 determines the coordinates of the vessel 5-2 in the image coordinate reference system.

The control module 320 then computes, in a step T1-2, a pan angle and a tilt angle of the camera module 310 using the determined coordinates and the coordinates of the centre of each image in the image coordinate reference system that allow the displacement of the camera module 310 so that the series of images is centred on the selected object 5 and insert them in a control command CC to further control the pan-tilt unit 300. Alternatively, in a similar manner, the control module 320 may compute a pan rotary speed, a pan rotary duration, a tilt rotary speed and a tilt rotary duration and send these data in the control command CC to further control the pan-tilt unit 300.

The control module 320 sends to the pan-tilt unit 300 in a step T1-3 the control command CC that allows the control of the pan-tilt unit 300. The calculated desired pan/tilt angles for the camera module 310 displacement are computed together with the IMU values to calculate the PTU 300 pan/tilt values to stabilise the camera module 310 mechanically to have the object in the centre of the field of view, also during the boat 1 or objects 5 movements and to simultaneously stabilise the camera module 310 mechanically around the pan/tilt axes to compensate for waves or fast movements.

The pan-tilt unit 300 receives the sent control command CC in a step T1-4 and orientates the camera module 310 around the pan axis Z and the tilt axis Y using the received control command CC in a step T1-5 to centre the field of view of the camera module 310 on the selected object 5, here the vessel 5-2, to track said selected vessel 5-2.

The series of images showing the tracked vessel 5-2 are advantageously displayed on the screen 40 in a step T1-6 during the tracking phase so that the user may visually follow the centred tracked vessel 5-2 in real time.

In the tracking phase, the camera module 310 zoom in on the tracked object 5 to follow said tracked object 5 closely.

In the tracking phase, the control module 320 advantageously increases the number of distance and angle calculations, made using the received images, between the boat 1 and the tracked vessel 5-2 to follow more closely the tracked vessel 5-2.

Advantageously, the control module 320 may predict a future path of the tracked vessel 5-2 based on a previous path of said vessel 5-2, for example using the previous positions and/or distance and/or angle of the vessel 5-2. The future path(s) of the tracked vessel 5-2 may only be calculated when in the tracking phase. The collision avoidance (alarm) generation, which may be used during the continuous phase, may be adapted specifically to the tracking phase. The target tracking may be improved by tracking an object along a predicted path instead of the current position to compensate for system dynamics or delays.

In a step T2, the tracking phase may end automatically, for example after a predetermined duration or if the tracked object gets away from the boat 1 and is not a danger anymore, or manually if the user ends said tracking phase by e.g., pushing a key or a button.

The invention allows to concentrate on one object 5 that might be dangerous for the boat 1, either automatically or manually, helping therefore the skipper of the boat 1 to anticipate any danger around the boat 1.

## Claims

1. A method for tracking an object (5) in a water area (2) using a tracking system (30), said tracking system (30) comprising a pan-tilt unit (300), a camera module (310) mounted on set pan-tilt unit (300), and a control module (320) implementing a neural network (NN), the pan-tilt unit (300) being configured to control the orientation of the camera module (310) around a pan axis and a tilt axis, said method comprising:
- a continuous phase comprising the steps of generating a video stream comprising a series of images using the camera module (310), said series of images representing the field of view of said camera module (310) on the water area (2), wherein each image of the series of images is defined in an image coordinate reference system, and detecting at least one object (5) in said generated series of images using said neural network (NN),
- at any time during the continuous phase, a tracking phase comprising a preliminary step of selecting one object (5) to be tracked among the at least one detected object (5) and an iterative tracking loop comprising the steps of:
- determining, by the control module (320), the coordinates of the selected object (5) in the image coordinate reference system,
- computing, by the control module (320), a pan angle and a tilt angle of the camera module (310) using the determined coordinates and the coordinates of the centre of each image in the image coordinate reference system that allow the displacement of the camera module (310) so that the series of images is centred on the selected object (5),
- sending, by the control module (320), a control command (CC) to the pan-tilt unit (300), said control command (CC) allowing the control of the pan-tilt unit (300) according to said computed pan angle and tilt angle,
- receiving, by the pan-tilt unit (300), the sent control command (CC),
- orientating, by the pan-tilt unit (300) and using the received control command (CC), the camera module (310) around the pan axis and the tilt axis to centre the field of view of the camera module (310) on the selected object (5) and thus track said selected object (5).

2. The method according to claim 1, wherein, the tracking system (1) further comprising an inertial measurement unit (330) mounted on the camera module (310) or on the pan-tilt unit (300), said method further comprising the steps of sending periodically, by the inertial measurement unit (330), to the control module (320), a value along the yaw axis and a value along the pitch axis, and stabilizing, by the control module (320), the images of the series of images along the yaw and pitch directions using said received values.

3. The method according to the preceding claim, wherein the step of computing, by the control module (320), a pan angle and a tilt angle of the camera module (310) further comprises using the received value along the yaw axis and the received value along the pitch axis to compute said pan angle and said tilt angle to simultaneously have the object in the centre of the field of view during the boat (1) or objects (5) movements while stabilising the camera module (310) mechanically around the pan/tilt axes.

4. The method according to any of the preceding claims, wherein the tracking phase is triggered manually by a user, for example by pressing on a key or a button, or automatically by the control module (320).

5. The method according to any of the preceding claims, said method further comprising the steps of estimating a future path of the tracked object (5) and of using said estimated future path to improve the tracking to compensate for the system dynamics or delay.

6. A control module (320) for a tracking system (30), said tracking system (30) comprising a pan-tilt unit (300), a camera module (310) mounted on set pan-tilt unit (300), and said control module (320), the pan-tilt unit (300) being configured to control the orientation of the camera module (310) around a pan axis and a tilt axis, said control module (320) implementing a neural network (NN) and being configured to:
- receive a video stream from the camera module (310), said video stream comprising a series of images,
- in a continuous phase, detect at least one object (5) in said received series of images using said neural network (NN),
- in a tracking phase:
- allow the selection of one object (5) to be tracked among the at least one detected object (5),
- determine the coordinates of the selected object (5) in the image coordinate reference system,
- compute a pan angle and a tilt angle of the camera module (310) using the determined coordinates and the coordinates of the centre of each image in the image coordinate reference system that allow the displacement of the camera module (310) so that the series of images is centred on the selected object (5),
- send a control command (CC) to the pan-tilt unit (300), said control command (CC) allowing the control of the pan-tilt unit (300) according to said computed pan angle and tilt angle.

7. A control module (320) according to the preceding claim, said control module (320) being configured to receive a value along the yaw axis and a value along the pitch axis sent periodically by an inertial measurement unit (330) and to stabilize the images of the series of images along the yaw and pitch directions using values received.

8. A control module (320) according to any of claims 6 or 7, said control module (320) being configured to automatically trigger the tracking phase.

9. A control module (320) according to any of claims 6 to 8, said control module (320) being configured to automatically activate the iterative tracking loop once an object (5) to be tracked has been selected.

10. A control module (320) according to any of claims 6 to 9, wherein the control module (320) is configured to, in the continuous mode, filter raw detections.

11. A tracking system (30) for tracking an object (5) in a water area (2), said tracking system (30) comprising a pan-tilt unit (300), a camera module (310) mounted on set pan-tilt unit (300), and a control module (320) according to any of claims 6 to 10, the pan-tilt unit (300) being configured to control the orientation of the camera module (310) around a pan axis and a tilt axis, wherein:
- the camera module (310) is configured to, in a continuous phase, generate a video stream comprising a series of images representing the field of view of said camera module (310) on the water area (2), wherein each image of the series of images is defined in an image coordinate reference system,
- the pan-tilt unit (300) is configured to receive a control command (CC) sent by the control module and orientate, using a received control command (CC), the camera module (310) around the pan axis and the tilt axis to centre the field of view of the camera module (310) on the selected object (5) and thus track said selected object (5).

12. The system (30) according to the preceding claim, said tracking system (30) further comprising an inertial measurement unit (330) mounted on the camera module (310) or on the pan-tilt unit (300), said inertial measurement unit (330) being configured to periodically send to the control module (320) a value along the yaw axis and a value along the pitch axis, and wherein the control module (320) is further configured to receive said values and stabilize the images of the series of images along the yaw and pitch directions using said received values.

13. The system (30) according to any of the claims 11 or 12, said tracking system (30) comprising a display screen configured to receive and display the series of images to a user during the continuous phase and/or tracking phase.

14. The system (30) according to any of the claims 11 to 13, wherein the camera module (310) comprises at least one thermal camera, said thermal camera being configured to generate the series of images.

15. A boat (1) comprising a tracking system (30) according to any of claims 11 to 14.
